(19) **Europäisches Patentamt / European Patent Office / Office européen des brevets**

(11) **EP 2 249 014 B1**

(12) **EUROPEAN PATENT SPECIFICATION**

(45) Date of publication and mention
of the grant of the patent:
**25.04.2012 Bulletin 2012/17**

(21) Application number: **09714280.6**

(22) Date of filing: **25.02.2009**

(51) Int Cl.:
*F02D 41/04* (2006.01)     *F02D 13/02* (2006.01)
*F02D 43/00* (2006.01)     *F02D 45/00* (2006.01)
*F02D 41/00* (2006.01)     *F02D 41/34* (2006.01)

(86) International application number:
**PCT/JP2009/000836**

(87) International publication number:
**WO 2009/107379 (03.09.2009 Gazette 2009/36)**

(54) **DEVICE FOR CONTROLLING FUEL INJECTION AMOUNT IN INTERNAL COMBUSTION ENGINE**

VORRICHTUNG ZUR STEUERUNG DER EINSPRITZMENGE BEI EINEM VERBRENNUNGSMOTOR

DISPOSITIF DE COMMANDE DE LA QUANTITÉ D'INJECTION DE COMBUSTIBLE DANS UN MOTEUR À COMBUSTION INTERNE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.02.2008 JP 2008046351**

(43) Date of publication of application:
**10.11.2010 Bulletin 2010/45**

(73) Proprietor: **Honda Motor Co., Ltd.**
**Minato-ku**
**Tokyo 107-8556 (JP)**

(72) Inventors:
• **TAKAMIYA, Hideharu**
**Wako-shi**
**Saitama 351-0193 (JP)**

• **IDE, Hirohito**
**Wako-shi**
**Saitama 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
EP-A1- 1 757 794     EP-A2- 1 323 902
JP-A- 2000 204 983     JP-A- 2006 029 159
JP-A- 2007 077 970     JP-A- 2007 247 629
JP-A- 2008 002 327     US-A1- 2005 247 277

**Description**

Technical Field

The present invention relates to an apparatus for controlling a fuel injection amount for an internal combustion engine.

Background Art

For a recent internal combustion engine, it has been proposed to mount a mechanism that is capable of changing a lift amount of an intake valve and control an intake air amount through the use of the mechanism. The patent document 1 below describes a technique for determining, in an internal combustion engine on which such a mechanism is mounted, a target lift curve when a change of the lift curve that exceeds the response capability of the mechanism is requested. Here, the target lift curve is determined based on a final target intake air amount that is obtained by smoothing a target intake air amount, not based on a target intake air amount corresponding to an opening degree of an accelerator pedal. An estimated intake air amount is calculated from the time-averaged value of the final target intake air amount during the lifting period. The fuel injection amount is determined based on the estimated intake air amount.

Patent Document 1: Japanese Patent Laid-Open Publication No. 2006-250042

Document EP1757794 describes a control method for an engine with a VVT that changes the lift amount of the valves and that changes the amount of fuel to be injected in the next cycle according to the predicted valve lift in that cycle.

Disclosure of the Invention

Problem to be Solved by the Invention

When the lift amount changes during the intake stroke of the engine, a mismatch may occur between the estimated intake air amount and an actual intake air amount. Therefore, a desired fuel amount may not be achieved, and hence the air-fuel ratio may deviate from a target value This may cause a deterioration of the acceleration performance and a deterioration of the emission.

Therefore, a technique for controlling a fuel injection amount by predicting an intake air amount with better accuracy is desired.

Means for Solving Problem

According to one aspect of the present invention, a control for a fuel injection amount in an internal combustion engine having a variable valve actuation mechanism that is capable of changing a lift amount of an intake valve is provided. According to the control, an actual lift amount of the intake valve is detected. The actual lift amount is feedback controlled in a predetermined control cycle such that the actual lift amount converges to a target lift amount with a predetermined time constant. A predicted value of the lift amount for a next control cycle is calculated by adding a value, which is obtained by multiplying a difference between the target lift amount and the actual lift amount by a predetermined gain, to the actual lift amount. A fuel injection amount to be injected in the next control cycle is determined based on the predicted value of the lift amount. Here, the gain is calculated based on a length of the control cycle and the time constant.

According to the invention, the lift amount for the next control cycle is predicted and the fuel injection amount is determined based on the predicted value. Therefore, the actual lift amount reaches the predicted value in a control cycle where the fuel is injected, and hence the fuel having an amount suitable for the actual lift amount can be injected. The time constant is an index representing a speed at which the actual lift amount converges to the target lift amount. Because the predicted value is determined based on the time constant, the accuracy of the predicted value can be improved.

According to one embodiment of the present invention, a target lift amount determined p control cycles before is determined. The value of p is determined based on an invalid time until the intake valve makes a transition from a still state to an operating state. If it is determined that the intake valve has made a transition from the still state to the operating state, the target lift amount determined p control cycles before is used for the calculation of the predicted value.

According to the invention, because a target lift amount to be used for the calculation of the predicted value is determined based on the invalid time of the intake valve, the predicted value when the intake valve has made a transition from a still state to an operating state can be calculated with better accuracy.

According to one embodiment of the present invention, if it is determined that the intake valve is in operation, a target lift amount determined in a current control cycle is used for the calculation of the predicted value. Thus, when the intake valve is in operation, considering the invalid time of the intake valve is not required.

According to one embodiment of the present invention, an operating velocity of the intake valve is detected. It is determined whether the intake valve has made a transition from the still state to the operating state, or is in operation in accordance with the operating velocity. Thus, it can be determined whether the invalid time should be considered for the calculation of the predicted value.

Brief Description of the Drawings

Figure 1 schematically shows an internal combustion engine and its control unit in accordance with one embodiment of the present invention;

Figure 2 schematically shows a structure of a variable valve actuation apparatus in accordance with one embodiment of the present invention;

Figure 3 schematically shows a structure of a first mechanism in accordance with one embodiment of the present invention;

Figure 4 schematically shows a structure of an apparatus for controlling a lift amount in accordance with one embodiment of the present invention;

Figure 5 is a diagram for explaining a principle of calculation of a predicted value in accordance with the present invention;

Figure 6 is a functional block diagram of a lift controller;

Figure 7 is a diagram for explaining a technique for calculating a composite transfer function of a lift controller and a plant in accordance with one embodiment of the present invention;

Figure 8 is a diagram for explaining a technique for calculating a composite transfer function of a lift controller and a plant in accordance with one embodiment of the present invention;

Figure 9 is a diagram for explaining a technique for deriving an equation for calculating a predicted value based on a composite transfer function in accordance with one embodiment of the present invention;

Figure 10 is a functional block diagram of a control apparatus for controlling a fuel injection amount in accordance with one embodiment of the present invention;

Figure 11 is a flowchart of a process for determining a fuel injection amount in accordance with one embodiment of the present invention; and

Figure 12 shows maps for determining an intake air amount and a fuel injection amount in accordance with one embodiment of the present invention.

Best Mode for carrying out the Invention

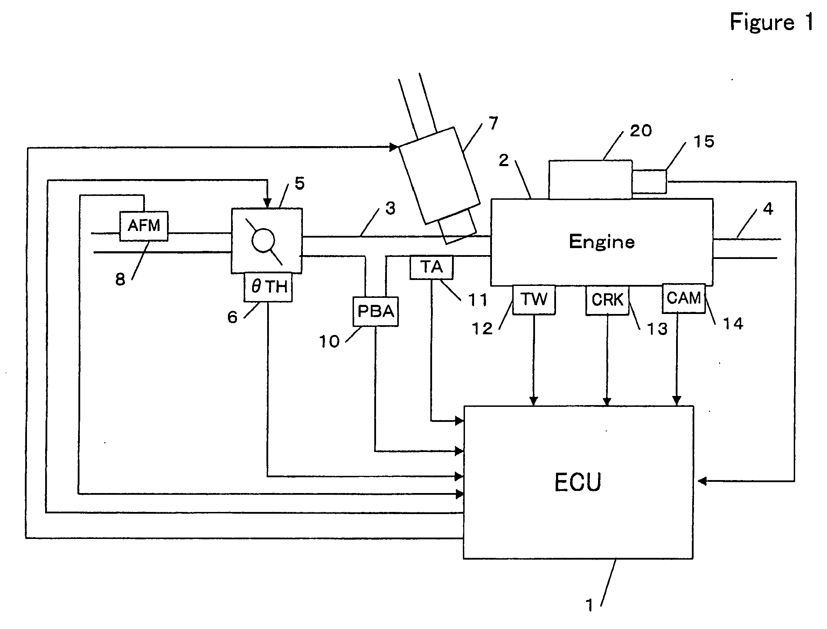

Embodiments of the present invention will be described referring to the attached drawings. Figure 1 is an overall structure of an internal combustion engine (hereinafter referred to as an engine) and its control unit in accordance with one embodiment of the present invention.

An electronic control unit (hereinafter referred to as an "ECU") 1 is a computer having a central processing unit (CPU) and a memory. One or more computer programs for implementing various controls for the vehicle and data (including maps) required for executing the programs may be stored in the memory. The ECU 1 receives signals sent from each part of the vehicle, carries out operations according to data and one or more programs stored in the memory, and generates control signals for controlling each part of the vehicle.

An engine 2 is an engine equipped with, for example, four cylinders. An intake manifold 3 and an exhaust manifold 4 are connected to the engine 2. A throttle valve 5 is provided in the intake manifold 4. An opening degree of the throttle valve 5 is controlled according to a control signal from the ECU 1. An amount of air introduced into the engine 2 can be controlled by controlling the opening degree of the throttle valve 5. A throttle valve opening ($\theta$TH) sensor 6 is attached to the throttle valve 5. The detection value of the sensor is sent to the ECU 1.

A fuel injection valve 7 is provided for each cylinder at upstream side of an intake valve (not shown in the figure) between the engine 2 and the throttle valve 5. The fuel injection valve 7 is connected to a fuel pump (not shown in the figure). A fuel injection timing and a fuel injection amount of the fuel injection valve 7 are changed according to a control signal from the ECU 1. Alternatively, the fuel injection valve 7 may be attached in such a manner as to protrude into the inside of a cylinder of the engine 2.

An air flow meter (AFM) 8 for detecting an amount of air flowing through the intake manifold 3 is provided upstream of the throttle valve 5.

An intake manifold absolute pressure (PBA) sensor 10 for detecting a pressure inside the intake manifold is provided downstream of the throttle valve5. An intake air temperature (TA) sensor 11 for detecting a temperature inside the intake manifold is provided downstream of the intake manifold absolute pressure sensor 10. These detection values are sent to the ECU 1. An engine water temperature sensor 12 for detecting a water temperature TW of the engine is provided in the engine 2. The detection value of this sensor is sent to the ECU 1.

A variable valve actuation apparatus 20 is provided in the engine 2. The apparatus 20 has a first mechanism 21 that is capable of continuously changing a lift amount and an opening angle (opening period) of the intake valve and the exhaust valve and a second mechanism 22 that is capable of continuously changing a phase of a cam that drives the intake valve with respect to a crankshaft. The phase of the cam that drives the intake valve is changed by the second mechanism 22, and hence the phase of the intake valve is changed.

A crank angle sensor 13 for detecting a rotational angle of the crankshaft of the engine 2 and a cam angle sensor 14 for detecting a rotational angle of a camshaft to which the cam that drives the intake valve of the engine 2 is engaged are connected to the ECU 1. The detection values of these sensors are provided to the ECU 1. The crank angle sensor 13 generates one pulse (CRK signal) every predetermined crank angle degrees (for example, 30 degrees). In response to the pulses, the rotational angle position of the crankshaft can be identified. The cam angle sensor 14 generates a pulse (CYL signal) at a predetermined crank angle position of a specific cylinder of the engine 2 and generates a pulse (TDC signal) at the top dead center (TDC) in the beginning of the intake stroke of each cylinder. These pulses are used for detecting an engine rotational speed NE and determining various control timings such as a fuel injection timing and an ignition timing. An actual phase of the camshaft of the intake valve is detected from a relative relation between the TDC signal outputted from the cam angle sensor 14 and the CRK signal outputted from the crank angle sensor 13.

A control shaft rotational angle (CSA) sensor 15 for detecting a rotational angle position of a control shaft that controls the lift amount of the intake valve is provided in the variable valve actuation apparatus 20.

The ECU 1 detects an operating state of the engine 2 and generates a control signal for controlling the throttle valve 5, the fuel injection valve 7, and the variable valve actuation apparatus 20, according to one or more programs and data (including one or more maps) stored in the memory in response to input signals from the above various sensors.

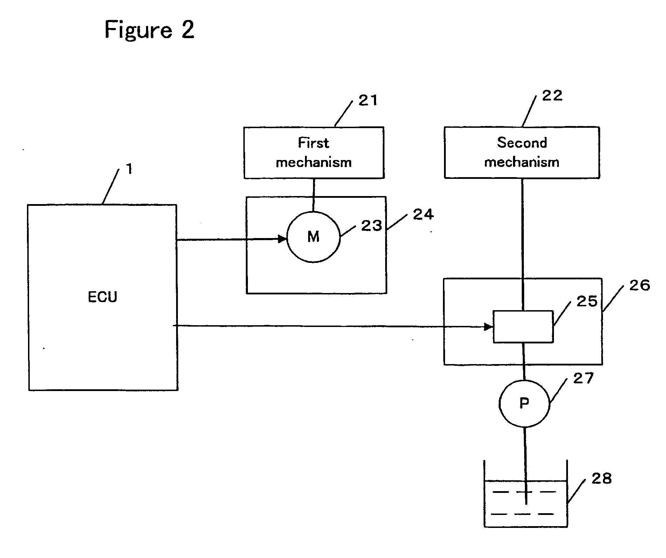

Figure 2 shows a specific structure of the variable valve actuation apparatus 20. As shown in the figure, the variable valve actuation apparatus 20 comprises a first mechanism 21 that is capable of continuously changing a lift amount and an opening angle (hereinafter, collectively referred to as a lift amount), a second mechanism 22 that is capable of continuously changing a phase of the intake valve, an actuator 24 having a motor 23 for continuously changing the lift amount of the intake valve through the first mechanism 21, and an actuator 26 having an electromagnetic valve 25 whose opening degree can be continuously changed so as to continuously change the phase of the intake valve through the second mechanism 22.

As a parameter indicating the phase of the intake valve, a phase CAIN of the camshaft of the intake valve is used. Lubricating oil in an oil pan 28 is pressurized by an oil pump 27 and provided to the electromagnetic valve 25. The motor 23 and the electromagnetic valve 25 operate according to control signals from the ECU1. A more detailed structure of the second mechanism 22 is described in, for example, Japanese Patent Laid-Open No. 2000-227013.

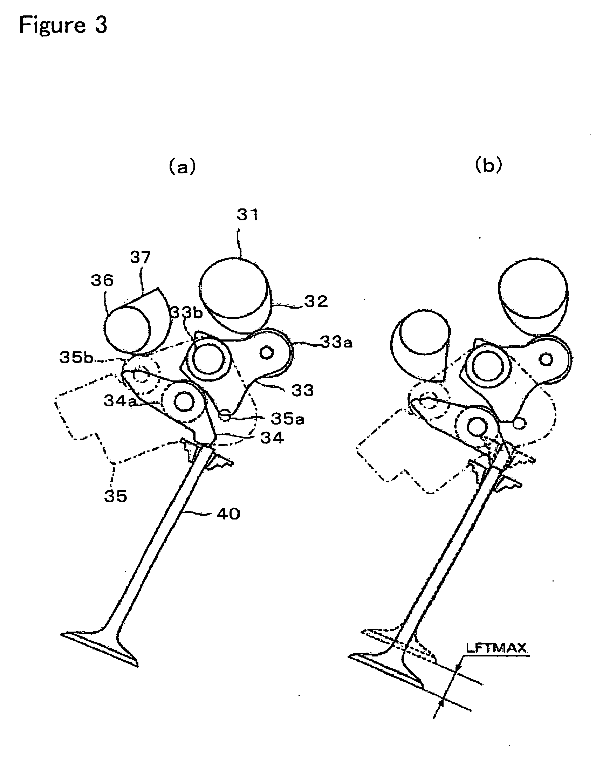

Referring to Figure 3, the first mechanism 21 is described. As shown in (a), the first mechanism 21 comprises a camshaft 31 on which a cam 32 is provided, a control arm 35 swingably supported by a cylinder head relative to a shaft 35a, a control shaft 36 on which a control cam 37 for swinging the control arm 35 is provided, a sub cam 33 swingably supported by the control arm 35 through a support shaft 33b and swinging by following the cam 32, and a rocker arm 34 following the sub cam 33 and driving the intake valve 40. The rocker arm 34 is swingably supported in the control arm 35.

The sub cam 33 has a roller 33a in contact with the cam 32 and swings relative to the shaft 33b by the rotation of the camshaft 31. The rocker arm 34 has a roller 34a in contact with the sub cam 33. The movement of the sub cam 33 is transferred to the rocker arm 34 through the roller 34a.

The control arm 35 has a roller 35b in contact with the control cam 37 and swings relative to the shaft 35a by the rotation of the control shaft 36. In a state shown in (a), the movement of the sub cam 33 is hardly transferred to the rocker arm 34. Therefore, the intake valve 40 is in an almost fully-closed state. In a state shown in (b), the movement of the sub cam 33 is transferred to the intake valve 40 through the rocker arm 34. The intake valve 40 opens to a maximum lift amount LFTMAX (for example, 12 mm).

Therefore, the lift amount of the intake valve 40 can be continuously changed by connecting the control shaft 36 to an output shaft of the motor 23 of the actuator 24 (Figure 2) through gears and rotating the control shaft 36 by the motor 23. In this embodiment, the CSA sensor 15 (Figure 1) for detecting the rotational angle position of the control shaft 36 is provided in the first mechanism 21. The detected rotational angle position CSA is used as a parameter indicating the lift amount. A more detailed structure of the first mechanism 21 is described in the patent application (No. 2006-197254) filed by the applicant of the present invention.

The present invention is not limited to the first mechanism 21 shown in the figure. It is noted that a mechanism that is capable of variably controlling the lift amount of the intake valve can be implemented by any appropriate means. In the above examples, not only the lift amount but also the opening angle is changed by the first mechanism 21. However, the present invention is applicable to a mechanism having a structure for changing only the lift amount.

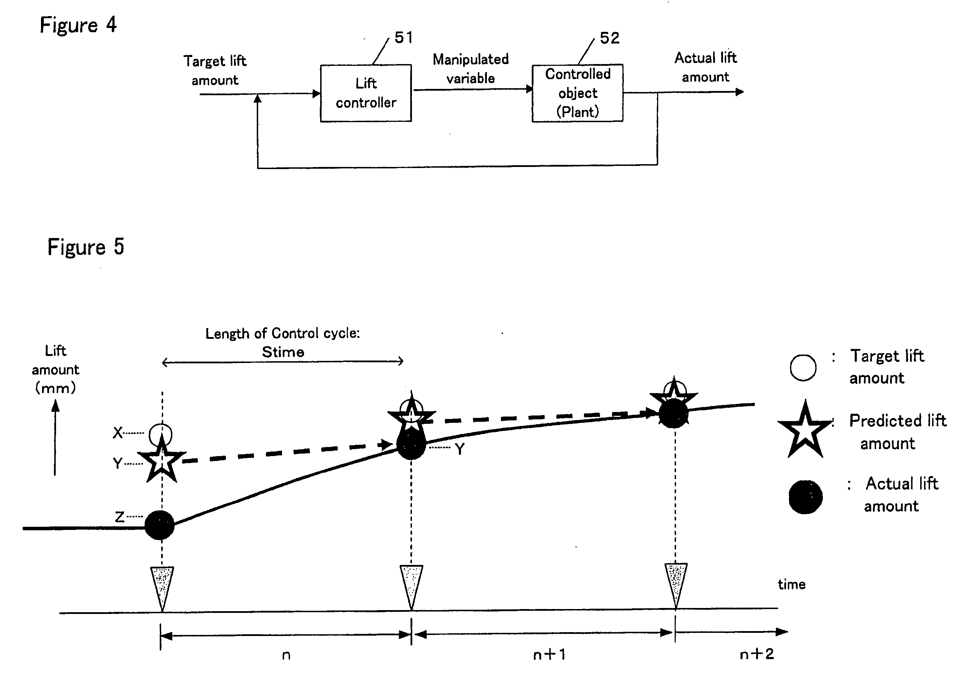

Figure 4 is a block diagram of a control apparatus for controlling the lift amount of the intake valve, in accordance with one embodiment of the present invention. A lift controller 51 is implemented in the ECU 1. In this example, a plant 52 includes the first mechanism 21 and the actuator 24 of Figure 2. The lift controller 51 determines a manipulated variable for causing an actual lift amount to converge to a target lift amount of the intake valve, according to a control method described later. The motor 23 of the actuator 24 operates the first mechanism 21 according to the manipulated variable to change the lift amount of the intake valve. The changed lift amount is detected as the actual lift amount by the CSA sensor 15 (Figure 1) and then fed-back to the lift controller 51.

Figure 5 is a diagram for explaining the principle of the calculation of a predicted value of the lift amount, in accordance with the present invention. Controls for the lift amount and the fuel injection amount are performed in accordance with a predetermined control cycle. In each control cycle, a target lift amount is determined according to the operating state (for example, an opening degree of an accelerator pedal) of the engine. In the figure, for a cylinder, behaviors of the target lift amount, the actual lift amount (detected by the CSA sensor 15) and a predicted lift amount that is determined according to the technique of the present invention are shown over three control cycles n through (n+2). The length of each control cycle is represented by "Stime". In the following embodiments, the control cycle is implemented at fixed time intervals. Therefore, the length Stime of the control cycle is constant (for example, 10 milliseconds).

Alternatively, the control cycle may be synchronized with the TDC signal such that the control is performed in response to the TDC signal. In such a case, the length Stime of the control cycle can be calculated based on the engine rotational speed. For example, in a case where the TDC signal is outputted at the top dead center in the intake stroke and the engine rotational speed detected in the current control cycle n is NE (rpm), then the length of the control cycle n can be calculated as follows.

$$\text{Stime} = \frac{1}{NE/60} \times \frac{\text{crank angle between TDC signals}}{360}$$

In each control cycle, the lift controller 51 controls the intake valve such that the actual lift amount moves toward the target lift amount. Referring to the control cycle n, the target lift amount is X (mm), and the actual lift amount is Z (mm). The predicted lift amount determined based on the target lift amount and the actual lift amount is Y (mm). In the control cycle n, the amount of fuel to be injected in the next control cycle (n+1) is determined based on this predicted lift amount Y. In the control cycle (n+1), the actual lift amount almost reaches the value Y of the predicted lift amount determined in the control cycle n. Therefore, fuel having an amount suitable for the actual lift amount that has been achieved in the cycle (n+1) is injected.

Thus, the fuel injection amount is determined one control cycle before the corresponding injection timing. If the fuel injection amount is determined using the actual lift amount detected in the control cycle n, fuel having an amount suitable for the actual lift amount achieved in the control cycle (n+1) where the corresponding actual injection is performed may not be injected, which causes a deviation of the air-fuel ratio. According to the present invention, the lift amount after one control cycle is predicted, and the fuel injection amount is determined based on the predicted lift amount. Therefore, fuel having an amount suitable for the actual lift amount that is achieved when the corresponding actual injection is performed can be provided.

The predicted lift amount can be calculated by the following equation.

$$\text{HALIFT}(n) = C\,(\text{ALCMD}(n) \cdot \text{ALIFT}(n)) + \text{LIFT}(n)$$

$$C = \text{length of control cycle Stime / (time constant } \tau p + \text{length of control cycle Stime)} \tag{1}$$

Here, ALIFT(n) indicates the actual lift amount detected in the control cycle n. ALCMD(n) indicates the target lift amount determined in the control cycle n. C is a gain, which is determined based on the length Stime of the control cycle and the time constant $\tau p$ of the lift amount control performed by the lift controller 51. HALIFT(n) indicates the predicted lift amount calculated in the control cycle n. The predicted lift amount is calculated by adding a value, obtained by multiplying a difference between the target lift amount and the actual lift amount by the gain, to the actual lift amount.

In the present invention, the predicted value HALIFT(n) is calculated in the control cycle n according to the above equation (1), and the fuel injection amount to be provided in the next control cycle (n+1) is determined according to the predicted value.

In the following, the grounds of the above equation (1) will be described.

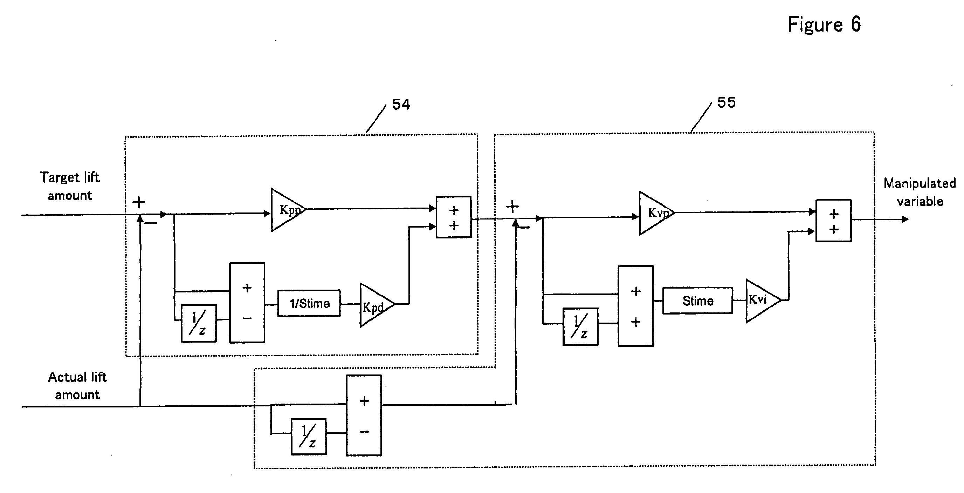

Figure 6 is a detailed block diagram of the lift controller 51 shown in Figure 4. In this embodiment, the lift controller 51 employs a PD control for a position control or lift amount control of the intake valve and a PI control for a velocity control or a control of the velocity at which the intake valve is moved, so as to determine the manipulated variable. The PD control block is represented by reference numeral 54. The PI control block is represented by reference numeral 55. Kpp indicates a proportional gain. Kpd indicates a differential gain. Kvp indicates a proportional gain. Kvi indicates an integral gain. 1/z indicates a delay element. Stime indicates the length of the control cycle as described above.

In block 54, a term obtained by multiplying a difference between the target lift amount and the actual lift amount by the proportional gain Kpp and a term obtained by multiplying the differential value of the above difference by the inverse (1/Stime) of the control cycle and the differential gain Kpd are added. In block 55, a difference between the current value and the previous value of the actual lift amount (the difference indicating an amount of change in the lift amount per one control cycle) is calculated, and a difference between the output of the block 54 and the difference thus calculated is further calculated. A term obtained by multiplying this difference by the proportional gain Kvp and a term obtained by multiplying the integral value of this difference by the length Stime of the control cycle and the integral gain Kvi are added.

On the other hand, for the plant 52 including the first mechanism 21 and the actuator 24 (figure 2), let a voltage U applied to the motor 23 of the actuator 24 be an input and a resultant angle θcs of the control shaft 36 of the first mechanism 21 be an output. According to the findings of the inventors, the equation of motion of the plant 52 can be expressed by a transfer function using the Laplace operator s, as shown by the equation (2).

$$\frac{\theta cs(s)}{U(s)} = \frac{1}{Jall \cdot s^2 + Ball \cdot s} \qquad (2)$$

Here, Jall indicates an inertia element of a system from the motor 23 to the control shaft 36 and includes an inertia of the motor 23 and an inertia of the control shaft 36. Ball indicates a viscous resistance of the system from the motor 23 to the control shaft 36 and includes a viscous resistance of the motor 23, a viscous resistance and a torque constant of the control shaft 36, a resistance of the motor, a reduction ratio and gear efficiency, etc.

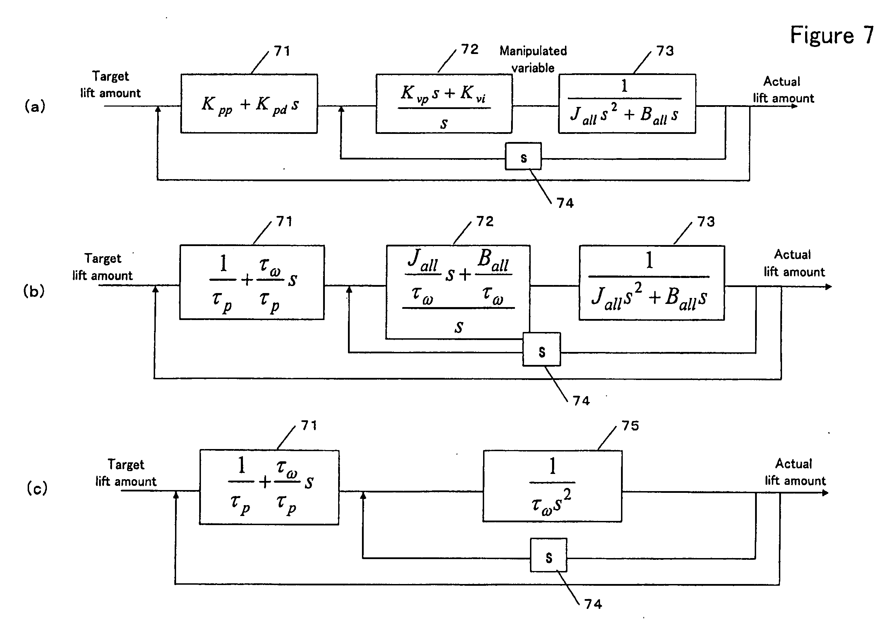

Figure 7(a) is a block diagram where the lift controller 51 (Figure 6) and the plant 52 are expressed by transfer functions using the Laplace operator s. Block 71 indicates the PD control block. Block 72 indicates the PI control block. Block 73 indicates the plant 52, in which the above equation (2) is shown.

Here, each gain of the PD and PI controls is set using the time constant, as follows. The time constant τp is a time constant of the position control (PD control). The time constant τω is a time constant of the velocity control (PI control).

$$Kpp = 1/\tau p$$

$$Kpd = \tau\omega/\tau p$$

$$Kvp = Jall/\tau\omega$$

$$Kvi = Ball/\tau\omega$$

The time constants τp and τω can be set to desired values. In order to implement the position control where the time constant τp is constant, the above gains Kpp through Kvi are set such that a composite transfer function of blocks 71 through 73 is a first-order delay system of the single time constant τp. Here, the time constant τp being constant means that the time required for the actual lift amount to reach about 63 % of the target lift amount is constant.

The composite transfer function of blocks 71 through 73 is determined. Using the definitions of the above time constants τp and τω, Figure 7(a) is rewritten into Figure 7(b).

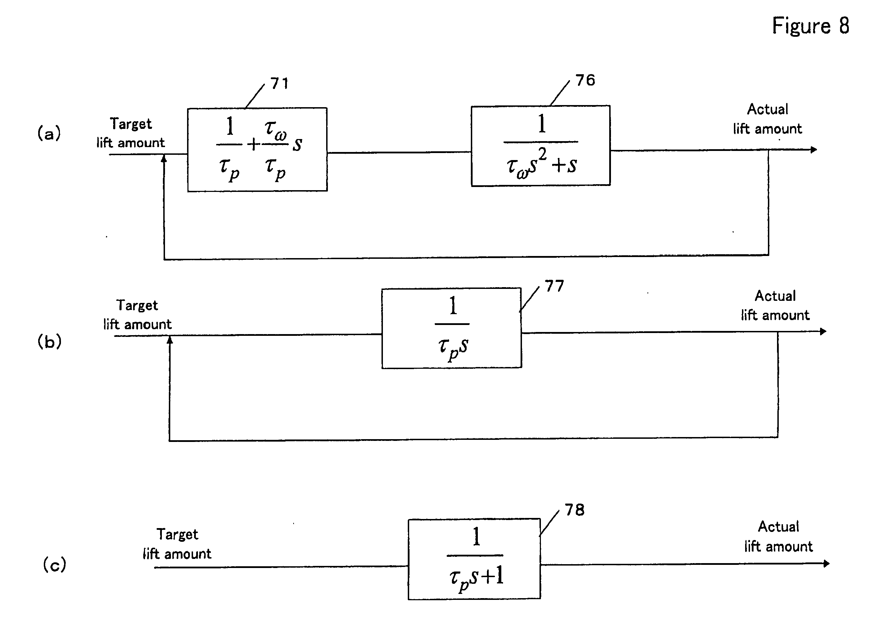

Next, transfer functions of the PI control block 72 and the plant 73 of Figure 7(b) are composited to obtain a transfer function shown by block 75 of Figure 7(c). The feedback of the Laplace operator s (represented by block 74) is composited to the block 75 to obtain a transfer function shown by block 76 of Figure 8(a). Further, block 71 and block 76 are composited to obtain a transfer function shown by block 77 of Figure 8(b). A feedback line from the actual lift amount to the target lift amount is further composited to obtain a transfer function shown by block 78 of Figure 8(c). Thus, the composite transfer function H of the lift controller 51 and the plant 52 is represented as shown in the following equation (3). This composite transfer function represents a first-order delay system of the time constant τp. Thus, by determining the gains Kpp through Kvi as described above, the composite transfer function where the time constant τω of the velocity control has been removed and the time constant τp remains is obtained. As described above, because the time constant τp is set to a desired value and the gains Kpp and Kpd are set based on τp, the lift amount can be controlled such that the time constant τp is constant.

$$\text{Composite Transfer Function } H = 1/(\tau p \cdot s + 1) \qquad (3)$$

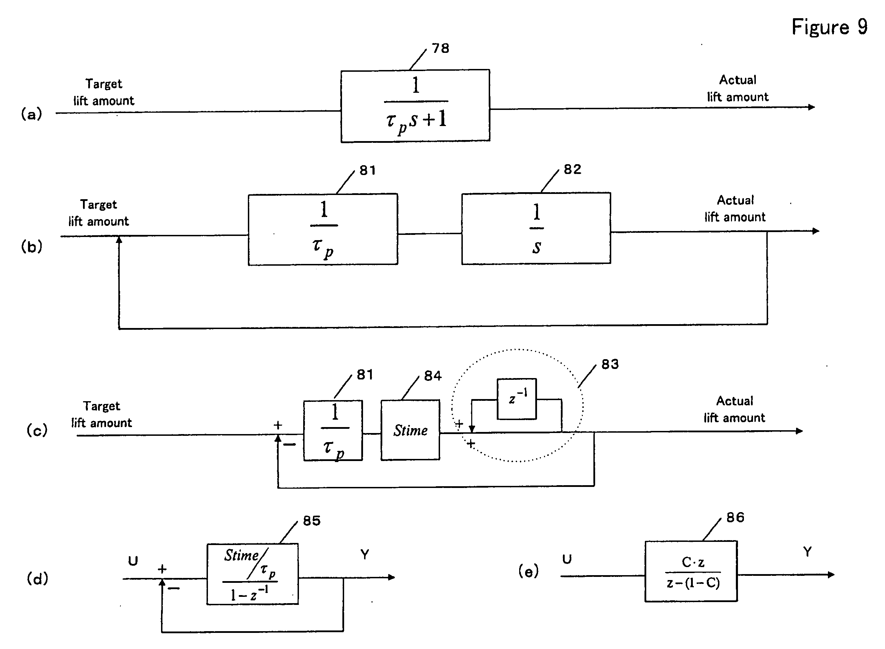

Next, referring to Figure 9, the grounds that the above equation (1) is derived from the composite transfer function H of the equation (3) will be described.

Block 78 of Figure 9(a) represents the transfer function H of the equation (3). In order to express the transfer function in a discrete form, block 78 is resolved into blocks 81 and 82 shown in (b). Letting the length of the control cycle in which the transfer function is executed be Stime, because the integral (1/s) is expressed as 1/(1-z-1) in a discrete form, the integral can be represented by using the delay element z as shown by reference numeral 83. Stime in block 84 indicates the integral time. Blocks 81, 83 and 84 are composited to obtain block 85 shown in (d). Letting Stime/τp be k, the loop transfer function H'(z) is determined (which is expressed by z).

$$H'(z) = \frac{\dfrac{k}{1-z^{-1}}}{1+\dfrac{k}{1-z^{-1}}} = \frac{\dfrac{k}{(1+k)}z}{z-(1-\dfrac{k}{(1+k)})} \qquad (4)$$

Letting C=k/(1+k), the equation (4) is rewritten as follows.

$$H'(z) = \frac{C \cdot z}{z-(1-C)}$$

where

$$C = \frac{k}{(1+k)} = \frac{Stime/\tau p}{1+Stime/\tau p} = \frac{Stime}{\tau p + Stime} \qquad (5)$$

The equation (5) is represented by Figure 9(e), which is expanded and transformed into the difference equation where an input is U and an output is Y, as follows. n indicates the control cycle.

$$\frac{Y(n)}{U(n)} = \frac{C \cdot z}{z - (1 - C)}$$

$$Y(n) = (1 - C)Y(n)z^{-1} + C \cdot U(n)$$

$$Y(n) = (1 - C)Y(n - 1) + C \cdot U(n) \qquad (6)$$

Letting $Y(n)$ in the equation (6) be the predicted lift amount $HALIFT(n)$, $Y(n-1)$ be the actual lift amount $ALIFT(n)$, and $U(n)$ be the target lift amount $ALCMD(n)$, the above equation (1) is derived.

In this embodiment, the position control is implemented by the PD control while the velocity control is implemented by the PI control. However, the present invention is not limited such a control form. Further, the velocity control is not necessarily required. In the present invention, any control method that can be expressed by a transfer function is applicable to the lift amount control. For example, a PI control, a PD control, a PID control and an H∞ control can be used. A control by a disturbance observer for estimating a disturbance applied to a plant and controlling the plant such that an influence by the disturbance on the plant is removed may be included. In these controls, the frequency characteristics (gain characteristic and phase characteristic) of the control can be determined by one or more control parameters. Therefore, these controls can be said as a control that is capable of implementing frequency shaping. For example, in the PI control, the gain characteristic and the phase characteristic of the PI control can be determined by the control parameters consisting of the proportional gain and the integral gain. Thus, the present invention is applicable to a control form where the control parameters used in the lift amount control are set using a time constant, and hence the composite transfer function of the control system including a plant is represented by the first-order delay system of the time constant, thereby controlling the lift amount such that the time constant is constant.

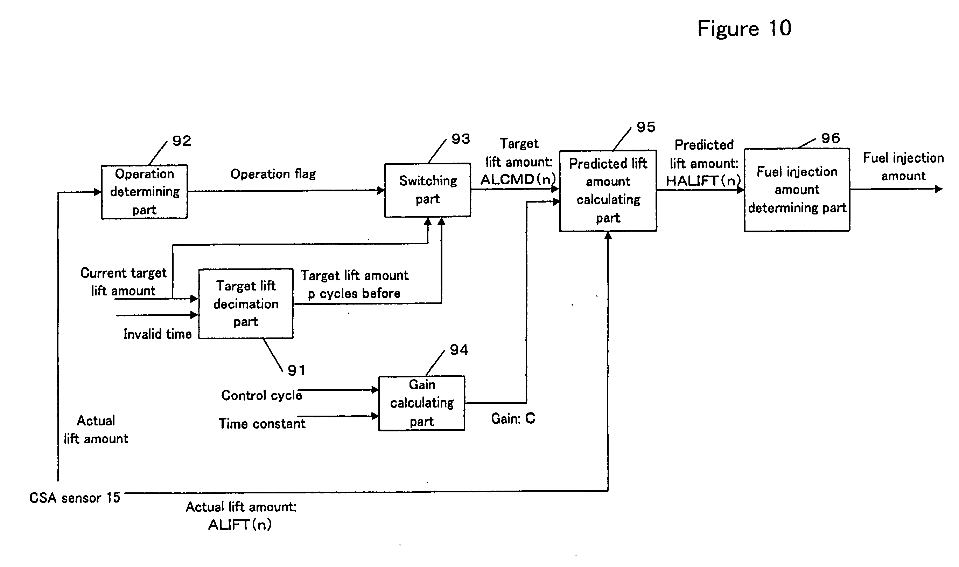

Figure 10 is a functional block diagram of an apparatus for controlling a fuel injection amount, in accordance with one embodiment of the present invention. Functions of each block can be implemented in the ECU 1.

Preferably, a target lift decimation part 91 is provided, which obtains a value p by dividing an invalid time of the intake valve by the length Stime of the control cycle. Past values of the target lift amount (that is, target lift amount values determined in past control cycles) have been stored in a memory of the ECU 1. The control cycle length Stime is constant in this embodiment, and has been stored in a memory of the ECU 1. The decimation part 91 outputs a target lift amount determined in a control cycle (n-p), which is p control cycles before.

The invalid time occurs when the intake valve makes a transition from a still state to an operating state in the variable lift mechanism (first mechanism 21). That is, although the lift controller 51 outputs to the actuator 24 of Figure 2 the manipulated variable for controlling the lift amount of the intake valve according to the target lift amount, there is a delay or the invalid time until the intake valve actually begins to move according to the manipulated variable. Therefore, in order to more accurately define a correspondence between the actual lift amount and the target lift amount, the above decimation process is performed.

For example, let the invalid time be 30 ms and the control cycle be 10 ms. A target lift amount determined in the control cycle (n-3), which is three control cycles before, is outputted by the decimation part 91. This case indicates that the operation start of the intake valve in the current control cycle is based on a target lift amount determined three control cycles before. The invalid time depends on the variable lift mechanism. The invalid time may be previously determined by simulation or the like, and be stored in a memory of the ECU 1.

An operation determining part 92 determines whether the intake valve has made a transition from a still state to an operating state in the current control cycle n. More specifically, the operation determining part 92 calculates a difference between the actual lift amount detected in the current control cycle n and the actual lift amount detected in the previous control cycle (n-1) via the CSA sensor 15. The difference is divided by the length Stime of the control cycle. A value obtained by the division represents a velocity at which the intake valve is operating. If the operating velocity is greater than or equal to a predetermined value, it is determined that the intake valve is in operation, and an operation flag having a value of one is outputted. If the operating velocity is less than the predetermined value, it is determined that the intake vale was still in the previous control cycle and has begun to operate in the current control cycle. The operation flag having a value of zero is outputted.

A switching part 93 examines the value of the operation flag. If the value of the operation flag is one, a value of the target lift amount determined in the current control cycle n is employed as the target lift amount $ALCMD(n)$. As described above, the target lift amount can be determined according to the operating state of the engine by any known method. If the value of the operation flag is zero, a value of the target lift amount p control cycles before, which is passed from the decimation part 91, is employed as the target lift amount $ALCMD(n)$. Thus, when the intake valve is not in operation, that is, when the intake valve has made a transition from a still state to an operating state, it indicates that the invalid time occurs. Therefore, the target lift amount p control cycles before is used.

Thus, when the intake valve is in operation, it can be considered that the invalid time does not substantially occur. Alternatively, when the intake valve is in operation, a slight invalid time may occur in a strict sense. For example, because the manipulated variable determined by the lift controller 51 passes through a communication line so as to reach the actuator 24, such invalid time may occur. Therefore, the invalid time may be considered even when the intake valve is in operation. In such a case, the invalid time is previously measured by simulation or the like and is stored in a memory of the ECU 1. The decimation part 91 calculates a value p' by dividing the invalid time by the length of the control time and outputs a target lift amount determined p' control cycles before. The switching part 93 selects the target lift amount p' control cycles before or the target lift amount p control cycles before according to the value of the operation flag, as the target lift amount ALCMD(n) of the current control cycle.

A gain calculating part 94 calculates the gain C based on the length Stime of the control cycle and the time constant τp according to the equation (1) as described above. As described above, the time constant τp can be set to a desired value and previously stored in a memory of the ECU 1.

A predicted lift amount calculating part 95 substitutes the gain C, the actual lift amount ALIFT(n) detected by the CSA sensor 15 in the current control cycle n, and the target lift amount ALCMD(n) selected in the control cycle n by the switching part 93, into the above equation (1) to calculate the predicted lift amount HALIFT(n).

A fuel injection amount determining part 96 determines a fuel injection amount based on the predicted value HALIFT(n) in the current control cycle n. The fuel injection amount is passed to a fuel controller (not shown in the figure) implemented in the ECU 1. The fuel controller drives the fuel injection valve such that fuel having the determined amount is injected in the next control cycle (n+1).

As to a case where the length Stime of the control cycle is not constant (for example, a case where the control is performed in response to the TDC signal), supplementary description is made. In order to calculate the value of p, past values of the time length of the control cycle are stored in a memory of the ECU 1. The decimation part 91 determines the number of control cycles to which the invalid time is equivalent. For example, if the invalid time is 30 ms, the length of the control cycle (n-1) is 9 ms, the length of the control cycle (n-2) is 11 ms, and the length of the control cycle (n-3) is 12 ms, then a time 30 ms (invalid time) ago corresponds to the control cycle (n-3) (because 30-9-11-12 is less than zero). Therefore, p=3 is obtained. Instead of storing past values of the length of the control cycle, past values of the engine rotational speed may be stored. As described above, the length of the control cycle n can be calculated from the engine rotational speed detected in the control cycle n.

Further, because the previous actual lift amount is detected in response to the previous TDC signal and the current actual lift amount is detected in response to the current TDC signal, it is preferable that the operation determining part 92 uses the length of the previous control cycle (n-1) for calculating the operating velocity. Further, because the gain C is a value for predicting how the actual lift amount detected in response to the current TDC signal changes until the next detection of the lift amount in response to the next TDC signal, it is preferable that the gain calculating part 94 uses the length Stime of the current control cycle n for calculating the gain C.

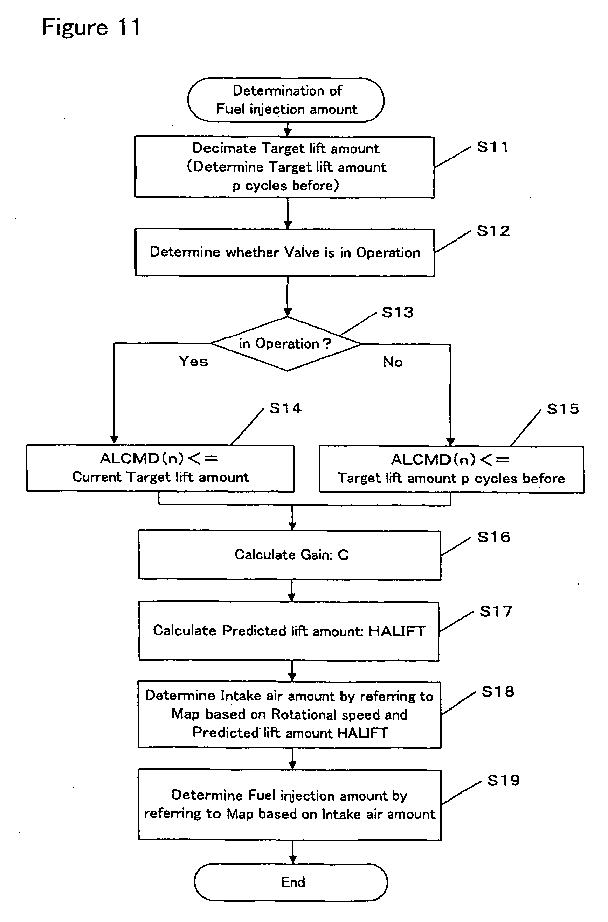

Figure 11 is a flowchart of a process for determining a fuel injection amount in accordance with one embodiment of the present invention. This process is performed in accordance with the above control cycle by the ECU1, more specifically, by the functional blocks shown in Figure 10.

In step S11, a target lift amount p control cycles before is determined based on the invalid time, as described above referring to Figure 10. In step S12, if it is determined that the intake valve has made a transition from a still state to an operating state in the current control cycle by calculating an operating velocity of the intake valve, an operation flag is set to zero. If it is determined that the intake valve is operating over the current control cycle, the operation flag is set to one.

In step S31, if the operation flag has a value of one indicating that the intake valve is in operation, a target lift amount determined in the current control cycle is set in the target lift amount ALCMD(n) (S14). If the operation flag has a value of zero indicating that the intake valve has made a transition from the still state to the operating state, the target lift amount determined p control cycles before is set in the target lift amount ALCMD(n) (S15).

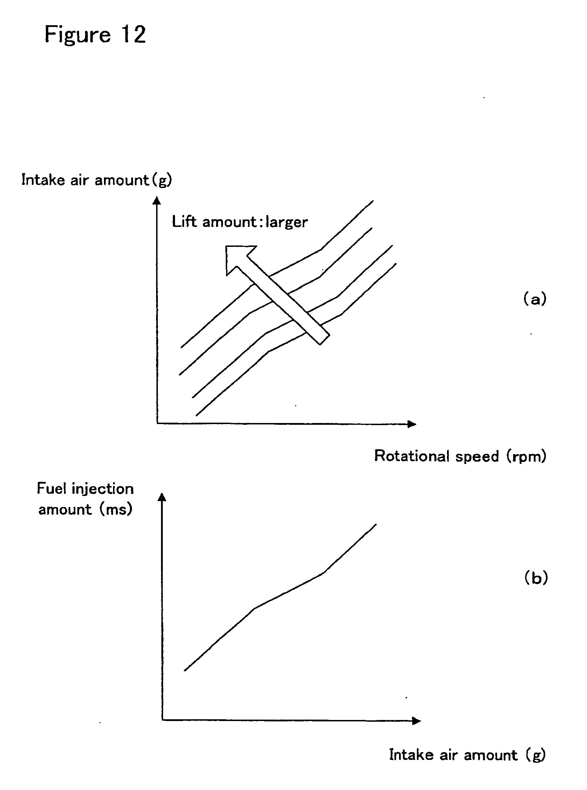

In step S16, the gain C is calculated based on the length Stime of the control cycle and the time constant τp according to the equation (1) described above. In step S17, the gain C, the actual lift amount ALIFT(n) detected by the CSA sensor 15, and the target lift amount ALCMD(n) are used to calculate the predicted lift amount HALIFT(n) according to the above equation (1). In step S18, an intake air amount is determined by referring to a predetermined map based on the engine rotational speed detected in the current control cycle and the predicted lift amount HALIFT(n) calculated in step S17. The map is a three-dimensional map of the lift amount, engine rotational speed, and intake air amount. One example of such maps is shown in Figure 12(a). As the engine rotational speed is higher, or the lift amount is larger, the intake air amount is increased. A map corresponding to the predicted lift amount HALIFT is selected. The selected map is referred to based on the detected engine rotational speed to determine a corresponding intake air amount.

In step S19, a fuel injection amount is determined by referring to a predetermined map based on the intake air amount determined in step S18. One example of this map is shown in Figure 12(b). As the intake air amount is larger, the fuel injection amount is increased. The maps shown in Figure 12(a) and 12(b) may be stored in a memory of the ECU 1.

The present invention should not be limited to the foregoing embodiments. Various modifications can be added to the foregoing embodiments. Furthermore, the foregoing embodiments can be applied to a general-purpose engine (for example, a vessel-propelling engine such as an outboard motor).

**Claims**

1. A control apparatus for controlling a fuel injection amount in an internal combustion engine having a variable valve actuation mechanism that is capable of changing a lift amount of an intake valve, comprising:

   means for detecting an actual lift amount of the intake valve;
   means for feedback controlling the actual lift amount in a predetermined control cycle such that the actual lift amount converges to a target lift amount with a predetermined time constant, said time constant being constant;
   predicted value calculating means for calculating a predicted value of the lift amount for a next control cycle by adding a value, which is obtained by multiplying a difference between the target lift amount and the actual lift amount by a predetermined gain, to the actual lift amount, the gain being calculated based on a length of the control cycle and the time constant; and
   means for determining a fuel injection amount to be injected in the next control cycle based on the predicted value of the lift amount.

2. The control apparatus of claim 1, further comprising:

   means for obtaining a target lift amount determined p control cycles before, the means including determining the value of p based on an invalid time until the intake valve makes a transition from a still state to an operating state,
   wherein if it is determined that the intake valve has made a transition from the still state to the operating state, the predicted value calculating means uses the target lift amount determined p control cycles before as the said target lift amount.

3. The control apparatus of claim 2,
   wherein if it is determined that the intake valve is in operation, a target lift amount determined in a current control cycle is used as the said target lift amount.

4. The control apparatus of claim 3, further comprising:

   means for detecting an operating velocity of the intake valve; and
   means for determining whether the intake valve has made a transition from the still state to the operating state, or is in operation, in accordance with the operating velocity.

5. A method for controlling a fuel injection amount in an internal combustion engine having a variable valve actuation mechanism that is capable of changing a lift amount of an intake valve, comprising the steps of:

   detecting an actual lift amount of the intake valve;
   feedback controlling the actual lift amount in a predetermined control cycle such that the actual lift amount converges to a target lift amount with a predetermined time constant, said time constant being constant;
   calculating a predicted value of the lift amount in a next control cycle by adding a value, which is obtained by multiplying a difference between the target lift amount and the actual lift amount by a predetermined gain, to the actual lift amount, the gain being calculated based on a length of the control cycle and the time constant; and
   determining a fuel injection amount to be injected in the next control cycle based on the predicted value of the lift amount.

6. The method of claim 5, further comprising the step of obtaining a target lift amount determined p control cycles before, the value of p being determined based on an invalid time until the intake valve makes a transition from a still state to an operating state,
   wherein if it is determined that the intake valve has made a transition from the still state to the operating state, the step of calculating a predicted value uses the target lift amount p control cycles before as the said target lift amount.

7. The method of claim 6,

wherein if it is determined that the intake valve is in operation, the step of calculating a predicted value uses a target lift amount determined in a current control cycle as the said target lift amount.

8. The method of claim 7, further comprising the steps of:

    detecting an operating velocity of the intake valve; and
    determining whether the intake valve has made a transition from the still state to the operating state, or is in operation, in accordance with the operating velocity.

**Patentansprüche**

1. Steuer-/Regelvorrichtung zur Steuerung/Regelung einer Kraftstoffeinspritzmenge in einem Verbrennungsmotor, welcher einen variablen Ventilbetätigungsmechanismus hat, der in der Lage ist, einen Hubbetrag eines Einlassventils zu verändern, umfassend:

    ein Mittel zum Erfassen eines gegenwärtigen Hubbetrags des Einlassventils;
    ein Mittel zur Rückkopplungssteuerung/regelung des gegenwärtigen Hubbetrags in einem vorbestimmten Steuer-/Regelzyklus, so dass der gegenwärtige Hubbetrag zu einem Zielhubbetrag mit einer vorbestimmten Zeitkonstante konvergiert, wobei die Zeitkonstante konstant ist;
    ein Vorhersagewert-Berechnungsmittel, um einen Vorhersagewert des Hubbetrags für einen nächsten Steuer-/Regelzyklus zu berechnen,
    indem ein Wert, welcher erhalten wird, indem eine Differenz zwischen dem Zielhubbetrag und dem gegenwärtigen Hubbetrag mit einer vorbestimmten Verstärkung multipliziert wird, zu dem gegenwärtigen Hubbetrag addiert wird, wobei die Verstärkung berechnet wird basierend auf einer Länge des Steuer-/Regelzyklus und der Zeitkonstanten; und
    ein Mittel zum Bestimmen einer Kraftstoffeinspritzmenge, welche in dem nächsten Steuer-/Regelzyklus einzuspritzen ist, basierend auf dem Vorhersagewert von dem Hubbetrag.

2. Steuer-/Regelvorrichtung nach Anspruch 1, ferner umfassend:

    ein Mittel zum Erhalten eines Zielhubbetrags, welcher p Steuer-/Regelzyklen zuvor bestimmt wurde, wobei das Mittel ein Bestimmen des Werts von p basierend auf der ungültigen Zeit, bis das Einlassventil einen Übergang von einem unbewegten Zustand zu einem Betriebszustand durchführt, umfasst,
    wobei dann, wenn bestimmt wird, dass das Einlassventil einen Übergang von dem unbewegten Zustand zu dem Betriebszustand durchführt hat, das Vorhersagewert-Berechnungsmittel den Zielhubbetrag, welcher p Steuer-/Regelzyklen zuvor bestimmt wurde, als den Zielhubbetrag verwendet.

3. Steuer-/Regelvorrichtung nach Anspruch 2,
wobei dann, wenn bestimmt wird, dass das Einlassventil in Betrieb ist, ein Zielhubbetrag, welcher in einem gegenwärtigen Steuer-/Regelzyklus bestimmt wird, als der Zielhubbetrag verwendet wird.

4. Steuer-/Regelvorrichtung nach Anspruch 3, ferner umfassend:

    ein Mittel zum Erfassen einer Betriebsgeschwindigkeit des Einlassventils; und
    ein Mittel zum Bestimmen, ob das Einlassventil einen Übergang von dem unbewegten Zustand zu dem Betriebszustand durchgeführt hat oder in Betrieb ist, gemäß der Betriebsgeschwindigkeit.

5. Verfahren zur Steuerung/Regelung einer Kraftstoffeinspritzmenge in einem Verbrennungsmotor mit einem variablen Ventilbetätigungsmechanismus, welcher in der Lage ist, einen Hubbetrag eines Einlassventils zu verändern, umfassend die Schritte:

    Erfassen eines gegenwärtigen Hubbetrags des Einlassventils;
    Rückkopplungssteuern/regeln des gegenwärtigen Hubbetrags in einem vorbestimmten Steuer-/Regelzyklus derart, dass der gegenwärtige Hubbetrag zu einem Zielhubbetrag mit einer vorbestimmten Zeitkonstante konvergiert, wobei die Zeitkonstante konstant ist;
    Berechnen eines Vorhersagewerts des Hubbetrags in einem nächsten Steuer-/Regelzyklus, indem ein Wert, welcher erhalten wird, indem eine Differenz zwischen dem Zielhubbetrag und dem gegenwärtigen Hubbetrag mit einer vorbestimmten Verstärkung multipliziert wird, zu dem gegenwärtigen Hubbetrag addiert wird, wobei die Verstärkung basierend auf einer Länge des Steuer-/Regelzyklus und der Zeitkonstanten berechnet wird; und Bestimmen einer Kraftstoffeinspritzmenge, welche in dem nächsten Steuer-/Regelzyklus einzuspritzen ist, basierend auf dem Vorhersagewert von dem Hubbetrag.

**6.** Verfahren nach Anspruch 5, ferner umfassend den Schritt, Erhalten eines Zielhubbetrags, welcher p Steuer-/Regelzyklen zuvor bestimmt wurde, wobei der Wert von p basierend auf einer ungültigen Zeit bestimmt wird, bis das Einlassventil einen Übergang von einem unbewegten Zustand zu einem Betriebszustand durchführt, wobei dann, wenn bestimmt wird, dass das Einlassventil einen Übergang von dem unbewegten Zustand zu dem Betriebszustand durchgeführt hat, der Schritt, einen Vorhersagewert zu berechnen, den Zielhubbetrag p Steuer-/Regelzyklen zuvor als den Zielhubbetrag verwendet.

**7.** Verfahren nach Anspruch 6, wobei dann, wenn bestimmt wird, dass das Einlassventil in Betrieb ist, der Schritt, einen Vorhersagewert zu berechnen, einen Zielhubbetrag, welcher in einem gegenwärtigen Steuer-/Regelzyklus bestimmt wird, als den Zielhubbetrag verwendet.

**8.** Verfahren nach Anspruch 7, ferner umfassend die Schritte:

Erfassen einer Betriebsgeschwindigkeit des Einlassventils; und
Bestimmen, ob das Einlassventil einen Übergang von dem unbewegten Zustand zu dem Betriebszustand durchgeführt hat oder in Betrieb ist, gemäß der Betriebsgeschwindigkeit.

**Revendications**

**1.** Appareil de commande permettant de commander une quantité d'injection de carburant dans un moteur à combustion interne comportant un mécanisme d'actionnement de soupape variable qui est capable de modifier une quantité de soulèvement d'une soupape d'admission, comprenant :

un moyen permettant de détecter une quantité de soulèvement effective de la soupape d'admission ;
un moyen permettant de commander à rétroaction la quantité de soulèvement effective dans un cycle de commande prédéterminé de sorte que la quantité de soulèvement effective converge vers une quantité de soulèvement cible avec une constante de temps prédéterminée, ladite constante de temps étant constante ;
un moyen de calcul de valeur prédite permettant de calculer une valeur prédite de la quantité de soulèvement pour un cycle de commande suivant en ajoutant une valeur, qui est obtenue en multipliant une différence entre la quantité de soulèvement cible et la quantité de soulèvement effective par un gain prédéterminé, à la quantité de soulèvement effective, le gain étant calculé en se basant sur la longueur du cycle de commande et la constante de temps ; et
un moyen permettant de déterminer une quantité d'injection de carburant à injecter dans le cycle de commande suivant en se basant sur la valeur prédite de la quantité de soulèvement.

**2.** Appareil de commande selon la revendication 1, comprenant en outre :

un moyen permettant d'obtenir une quantité de soulèvement cible déterminée p cycles de commande avant, le moyen permettant de déterminer la valeur de p en se basant sur un temps invalide jusqu'à ce que la soupape d'admission fasse une transition d'un état immobile à un état de service, dans lequel s'il est déterminé que la soupape d'admission à effectuer une transition de l'état immobile à l'état de service, le moyen de calcul de valeur prédite utilise la quantité de soulèvement cible déterminée p cycles de commande avant comme ladite quantité de soulèvement cible.

**3.** Appareil de commande selon la revendication 2, dans lequel s'il est déterminé que la soupape d'admission est en service, une quantité de soulèvement cible déterminée dans un cycle de commande actuel est utilisée comme ladite quantité de soulèvement cible.

**4.** Appareil de commande selon la revendication 3, comprenant en outre :

un moyen permettant de détecter une vitesse de service de la soupape d'admission et

un moyen permettant de déterminer si la soupape d'admission a effectué une transition de l'état immobile à l'état de service, ou est en service, en conformité avec la vitesse de service.

5. Procédé de commande d'une quantité d'injection de carburant dans un moteur à combustion interne comportant un mécanisme d'actionnement de soupape variable qui est capable de modifier une quantité de soulèvement d'une soupape d'admission, comprenant les étapes de :

détection d'une quantité de soulèvement effective de la soupape d'admission ;
commande à rétroaction de la quantité de soulèvement effective dans un cycle de commande prédéterminé de sorte que la quantité de soulèvement effective converge vers une quantité de soulèvement cible avec une constante de temps prédéterminée ; ladite constante de temps étant constante ;
calcul d'une valeur prédite de la quantité de soulèvement dans un cycle de commande suivant en ajoutant une valeur, qui est obtenue en multipliant une différence entre la quantité de soulèvement cible et la quantité de soulèvement effective par un gain prédéterminé, à la quantité de soulèvement effective, le gain étant calculé en se basant sur une longueur du cycle de commande et la constante de temps ; et
déterminer une quantité d'injection de carburant à injecter dans le cycle de commande suivant en se basant sur la valeur prédite de la quantité de soulèvement.

6. Procédé selon la revendication 5, comprenant en outre l'étape consistant à obtenir une quantité de soulèvement cible déterminée p cycles de commande avant, la valeur de p étant déterminée en se basant sur un temps invalide jusqu'à ce que la soupape d'admission fasse une transition d'un état immobile à un état de service,
dans lequel s'il est déterminé que la soupape d'admission a effectué une transition de l'état immobile à l'état de service, l'étape de calcul de valeur prédite utilise la quantité de soulèvement cible p cycles de commande avant comme ladite quantité de soulèvement cible.

7. Procédé selon la revendication 6,
dans lequel s' il est déterminé que la soupape d'admission est en service, l'étape de calcul d'une valeur prédite utilise une quantité de soulèvement cible déterminée dans un cycle de commande actuel comme ladite quantité de soulèvement cible.

8. Procédé selon la revendication 7, comprenant en outre les étapes consistant à :

détecter une vitesse de service de la soupape d' admission ; et
déterminer si la soupape d'admission a effectué une transition de l'état immobile à l'état de service, ou est en service, en conformité avec la vitesse de service.

Figure 1

# Figure 2

# Figure 3

(a)                                        (b)

Figure 4

Figure 5

EP 2 249 014 B1

Figure 6

Figure 7

EP 2 249 014 B1

Figure 8

(a)

Target lift amount → $\dfrac{1}{\tau_p} + \dfrac{\tau_\omega}{\tau_p}s$ (71) → $\dfrac{1}{\tau_\omega s^2 + s}$ (76) → Actual lift amount

(b)

Target lift amount → $\dfrac{1}{\tau_p s}$ (77) → Actual lift amount

(c)

Target lift amount → $\dfrac{1}{\tau_p s + 1}$ (78) → Actual lift amount

Figure 9

(a)

Target lift amount → $\dfrac{1}{\tau_p s + 1}$ (78) → Actual lift amount

(b)

Target lift amount → $\dfrac{1}{\tau_p}$ (81) → $\dfrac{1}{s}$ (82) → Actual lift amount

(c)

Target lift amount → $\dfrac{1}{\tau_p}$ (81) → Stime (84) → + + $z^{-1}$ (83) → Actual lift amount

(d)

$U$ → + − $\dfrac{Stime/\tau_p}{1 - z^{-1}}$ (85) → $Y$

(e)

$U$ → $\dfrac{C \cdot z}{z - (1-C)}$ (86) → $Y$

Figure 10

EP 2 249 014 B1

# Figure 11

```
        ⎛   Determination of    ⎞
        ⎝  Fuel injection amount ⎠
                  │
                  ▼
   ┌─────────────────────────────┐
   │   Decimate Target lift amount│────  S11
   │  (Determine Target lift amount│
   │      p cycles before)        │
   └─────────────────────────────┘
                  │
                  ▼
   ┌─────────────────────────────┐
   │ Determine whether Valve is in │────  S12
   │          Operation           │
   └─────────────────────────────┘
                  │
                  ▼
                                    S13
              ◇ in Operation? ◇
       Yes                      No
```

S14 — ALCMD(n) <= Current Target lift amount

S15 — ALCMD(n) <= Target lift amount p cycles before

S16 — Calculate Gain: C

S17 — Calculate Predicted lift amount: HALIFT

S18 — Determine Intake air amount by referring to Map based on Rotational speed and Predicted lift amount HALIFT

S19 — Determine Fuel injection amount by referring to Map based on Intake air amount

End

# Figure 12

Intake air amount (g)

Lift amount : larger

Rotational speed (rpm)

(a)

Fuel injection amount (ms)

Intake air amount (g)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006250042 A
- EP 1757794 A
- JP 2000227013 A
- WO 2006197254 A